# FASCICULE DE BREVET EUROPEEN

(11) **EP 2 511 196 B1**
(45) Date de publication et mention de la délivrance du brevet: **01.04.2020**
(21) Numéro de dépôt: 12163556.9
(22) Date de dépôt: 10.04.2012
(51) Int. Cl.: B05B 11/00, A45D 34/02, B29C 65/06, B29L 31/00, B29C 65/00

(54) **Flacon de distribution d'un produit fluide équipé d'une soupape de remplissage**
Abgabevorrichtung für ein flüssiges Produkt, die ein Füllventil umfasst
Dispensing unit for a fluid provided with a filling valve

(30) Priorité: 11.04.2011 FR 1153144
(43) Date de publication de la demande: 17.10.2012
(73) Titulaire: Albéa le Tréport, 76470 Le Tréport (FR)
(72) Inventeur: Dumont, Pierre, 80570 Dargnies (FR); Lasnier, Jacky, 76480 Sainte Marguerite sur Duclair (FR); Octau, Jean-Luc, 76630 Intraville (FR)
(74) Mandataire: Gevers & Orès

(56) Documents cités:
- EP-A1- 1 964 502
- EP-A1- 2 441 344
- WO-A1-2010/094963
- WO-A1-2011/026969
- US-A1- 2003 056 841

## Description

L'invention concerne un flacon de distribution d'un produit fluide, notamment liquide, par exemple d'un produit cosmétique de soin, de maquillage ou de parfumage, ou d'un produit pharmaceutique.

Le flacon de distribution comprend un corps dans lequel un réservoir de conditionnement du produit est formé, ainsi qu'un dispositif de prélèvement du produit conditionné qui est monté de façon étanche sur ledit corps. En particulier, le dispositif de prélèvement peut comprendre une pompe à actionnement manuel qui est alimentée en produit conditionné, ladite pompe étant agencée pour distribuer le produit sous pression, par exemple sous la forme d'un aérosol.

Dans un exemple d'application, les flacons selon l'invention permettent la distribution d'échantillons de produit, notamment pour un volume de produit conditionné dans le réservoir qui est compris entre 1 et 10 ml. En particulier, les échantillons ainsi distribués peuvent permettre à un client de tester le produit, les flacons étant alors qualifiés de flacons testeurs d'échantillons. En variante, les flacons peuvent être dits « de sac » en ce qu'ils permettent de transporter facilement un volume réduit de produit, par opposition à des flacons de contenance supérieure qui sont en général lourds et encombrants car cossus.

Dans ces applications, par exemple pour des raisons logistiques, de praticité ou encore environnementales de recyclage, il peut être souhaitable de pouvoir recharger le réservoir en produit à partir d'une source dudit produit. En effet, il est peu pratique pour un utilisateur d'effectuer le remplissage du réservoir à l'aide d'un petit entonnoir et peu écologique de jeter un flacon vide pour le remplacer par un plein constituant recharge.

Des flacons de distribution sont déjà proposés à la vente, dans lesquels le corps est équipé d'une soupape de remplissage du réservoir qui est agencée pour permettre la mise en communication d'une source de produit avec ledit réservoir. En particulier, la soupape peut s'ouvrir par appui sur le tube de sortie de la pompe d'un flacon source qu'il convient d'actionner à plusieurs reprises pour réaliser le remplissage du réservoir par injection du produit source.

On connait également, notamment du document FR-2 854 131, le vidage d'un réservoir au moyen d'une pompe de distribution sans reprise d'air de sorte à créer une dépression dans ledit réservoir, ladite dépression permettant de réaliser le remplissage dudit réservoir par aspiration du produit source.

Toutefois, les soupapes selon l'art antérieur ne permettent pas de garantir un remplissage satisfaisant du réservoir, notamment relativement à l'étanchéité entre le tube de sortie du flacon source et la soupape, ce problème étant d'autant plus pénalisant lorsque le remplissage doit être réalisé par aspiration du produit source.

En outre, les soupapes selon l'art antérieur ne sont pas compatibles avec les différentes configurations de tubes de sortie du commerce, ce qui limite les possibilités de remplissage d'un flacon de distribution équipé d'une telle soupape.

L'invention vise à perfectionner l'art antérieur en proposant notamment un flacon de distribution équipé d'une soupape de remplissage dont la fiabilité est améliorée, notamment relativement à son étanchéité avec le tube de sortie lors du remplissage, et ce avec une gamme étendue de configuration de tubes de sortie de flacon source.

A cet effet, l'invention propose un flacon de distribution d'un produit fluide comprenant un corps dans lequel un réservoir destiné au conditionnement dudit produit est formé, ledit flacon comprenant en outre un dispositif de prélèvement dudit produit conditionné qui est monté de façon étanche sur ledit corps, ledit corps étant en outre équipé d'une soupape de remplissage dudit réservoir qui est agencée pour permettre la mise en communication d'un tube de sortie d'une source de produit avec ledit réservoir, la soupape présentant un gicleur pourvu d'un canal interne qui s'étend entre un orifice amont débouchant sur une paroi externe dudit gicleur et un orifice aval, ledit gicleur étant monté en translation dans une bague solidaire du corps entre une position stable de fermeture de l'orifice aval et une position contrainte de mise en communication étanche du canal interne avec le réservoir de conditionnement, la bague présentant une portée intérieure délimitant une ouverture d'introduction du tube de sortie, la paroi externe du gicleur en position de fermeture étant en appui sur ladite portée intérieure en disposant dans ladite ouverture une portée centrale dans laquelle débouche l'orifice amont, ladite soupape comprenant en outre un joint externe qui est interposé entre ladite paroi externe et ladite portée intérieure, ledit joint présentant un trou disposé en regard de l'orifice amont et une zone d'actionnement disposée dans l'ouverture en regard de la portée centrale, ladite zone d'actionnement étant agencée pour permettre le remplissage par mise en appui étanche du tube de sortie sur elle afin de déplacer le gicleur en position de mise en communication, l'ouverture présentant un diamètre externe qui est supérieur au diamètre du trou du joint externe, l'ouverture étant délimitée par un bord, ledit bord formant un chanfrein présentant un diamètre externe qui est inférieur à son diamètre interne.

D'autres objets et avantages de l'invention apparaîtront dans la description qui suit, faite en référence aux figures annexées, dans lesquelles :
- la figure 1 est une vue en coupe longitudinale d'un flacon de distribution selon un mode de réalisation de l'invention, la soupape de remplissage étant en position stable de fermeture ;
- la figure 2 est une vue partielle en coupe longitudinale montrant la soupape de remplissage de la figure 1 en position contrainte de mise en communication par appui d'un gicleur d'une pompe d'un flacon source de produit ;
- la figure 3 représente un agrandissement de la zone III de la figure 1 ;
- la figure 4 représente partiellement en perspective le couvercle du corps du flacon de distribution selon la figure 1.

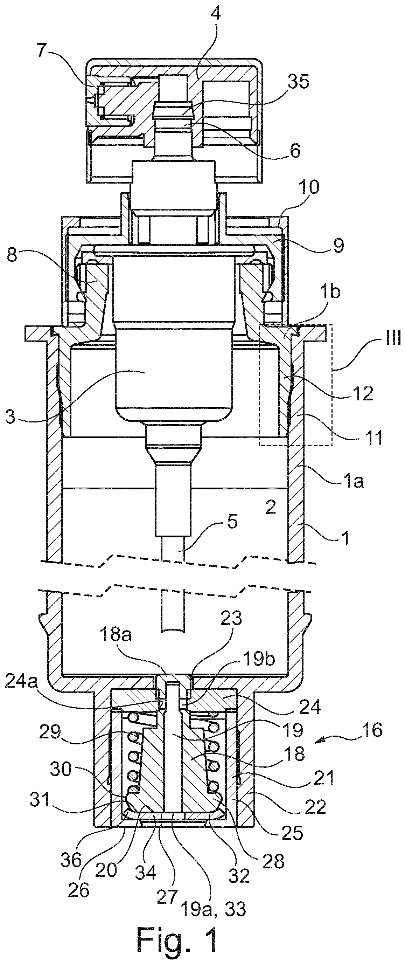

Dans la description, les termes de positionnement dans l'espace sont pris en référence à la position du flacon représenté sur la figure 1.

En relation avec les figures, on décrit ci-dessous un flacon destiné à contenir un produit fluide en vue de sa distribution. Dans des exemples particuliers, le produit peut être liquide, notamment un produit cosmétique de soin, de maquillage ou de parfumage, ou un produit pharmaceutique.

Le flacon comprend un corps 1 dans lequel un réservoir 2 destiné au conditionnement du produit est formé. Selon une application particulière, le réservoir 2 peut avoir une contenance comprise entre 1 et 10 ml de sorte à permettre la distribution d'échantillons de produit.

Dans le mode de réalisation représenté, le corps 1 est rigide, notamment en présentant une rigidité suffisante pour que le volume du réservoir 2 demeure sensiblement constant, ledit corps étant destiné à être inséré dans un habillage (non représenté). En variante non représentée, le corps 1 peut être souple, notamment déformable lors de la distribution du produit.

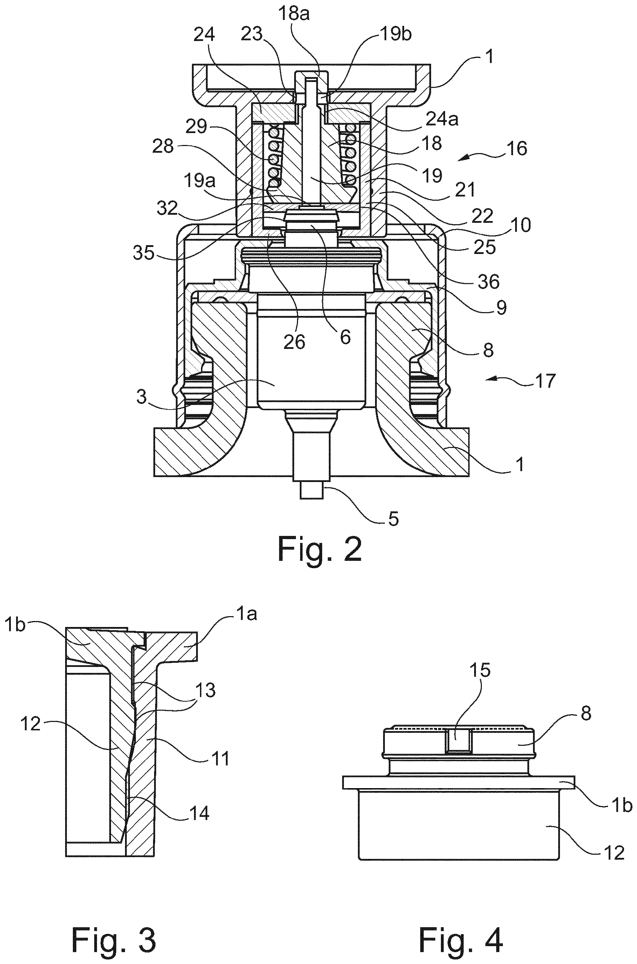

Le flacon comprend également un dispositif de prélèvement 3 du produit conditionné qui est monté de façon étanche sur le corps 1, notamment dans l'ouverture supérieure dudit corps. Dans le mode de réalisation représenté, le dispositif de prélèvement comprend une pompe 3 de distribution (non coupée sur les figures 1 et 2), ladite pompe étant actionnée manuellement au moyen d'un bouton poussoir 4 qui est alimenté avec le produit sous pression en vue de sa distribution.

La pompe 3 comprend un corps présentant une partie inférieure qui est pourvue d'un orifice d'alimentation dans lequel est fixé un tube plongeur 5 d'alimentation de ladite pompe en produit conditionné. Selon une réalisation connue, le bouton 4 est monté sur l'extrémité supérieure d'un gicleur 6 pour l'actionner en translation réversible sur une course de distribution, un piston étant monté sur la partie inférieure dudit gicleur entre un état d'obturation et un état d'alimentation des orifices dudit gicleur.

Le bouton poussoir 4 est équipé d'une buse de pulvérisation 7 qui est agencée pour distribuer radialement un aérosol du produit. Toutefois, l'invention n'est pas limitée à un mode particulier de distribution du produit. En particulier, notamment pour un embout nasal de pulvérisation, le bouton poussoir 4 peut permettre une distribution axiale du produit et un autre type de dispositif de prélèvement 3 peut être envisagé.

Dans le mode de réalisation représenté, le corps 1 présente une base tubulaire 1a sur laquelle est associé un couvercle 1b, le dispositif de prélèvement 3 étant fixé audit couvercle. Plus précisément, le couvercle 1b comprend un col 8 autour duquel un manchon 9 est fixé au moyen d'une frette 10, la pompe 3 étant fixée dans ledit manchon. La base tubulaire 1a et le couvercle 1b peuvent être réalisés par injection sous pression de matière rigide, par exemple de polypropylène translucide ou transparent tel que le métallocène.

Par ailleurs, la base tubulaire 1a et le couvercle 1b présente chacun une paroi annulaire 11, 12, lesdites parois étant associées par soudure, notamment par friction rotative, dont le coût industriel est bas, la mise en œuvre facile et la fiabilité d'étanchéité bonne. En relation avec la figure 3, les profils de soudures comprennent des diamètres de centrage 13 ainsi que des zones d'interférence 14 par fusion. Par ailleurs, la figure 4 montre le cran 15 d'entraînement en rotation qui est pratiqué sur le col 8 du couvercle 1b.

En variante non représentée, le corps 1 peut être monobloc, par exemple réalisé par injection-soufflage ou extrusion-soufflage. Il peut également être réalisé dans une autre matière plastique, en métal, par exemple en aluminium, ou en verre.

Le corps 1 du flacon est équipé d'une soupape 16 de remplissage du réservoir 2 qui est agencée pour permettre la mise en communication d'un tube de sortie d'une source de produit 17 avec ledit réservoir. La source de produit 17 peut comprendre un réservoir source sur lequel est disposé un tube de sortie, le remplissage en produit du réservoir 2 étant réalisé par montage dudit tube en appui étanche sur la soupape 16 qui est agencée pour s'ouvrir de façon réversible.

En particulier, on peut utiliser en tant que source de produit 17 un flacon nourrice de contenance supérieure, ledit flacon étant équipé d'une pompe dont le bouton poussoir est retiré pour permettre la disposition du gicleur en appui étanche sur la soupape 16. En effet, outre l'ouverture de la soupape 16, l'appui étanche provoque l'ouverture de la pompe afin de permettre le passage du produit de remplissage au travers d'elle. Sur la figure 2, le flacon nourrice 17 présente la même pompe 3 que celle équipant le flacon de distribution.

Selon une autre réalisation, le réservoir source est formé à l'intérieur d'une poche souple équipée d'un tube de sortie, ladite poche pouvant être remplie de produit sans air ni gaz pour la bonne conservation dudit produit. Le transfert du produit dans le réservoir 2 est alors possible dans toutes les positions et la poche souple ne peut pas être détournée de son rôle de source puisque sans gaz propulseur, ni pression interne, ni bouton poussoir pour actionner une éventuelle pompe associée au tube de sortie.

Le dispositif de prélèvement 3 peut être du type sans reprise d'air (airless en anglais) dans le réservoir 2 en compensation du volume de produit distribué. En particulier, la pompe 3 peut être dépourvue de trou d'évent ou comprendre un trou d'évent qui est occulté ou disposé de sorte à ne pas assurer la fonction de reprise d'air.

Le produit prélevé sans reprise d'air dans le réservoir 2 permet de créer dans ledit réservoir une dépression qui augmente au fur et à mesure de la distribution, ladite dépression permettant de réaliser le remplissage dudit réservoir par aspiration du produit source.

En particulier, pour assurer un vidage total du réservoir 2, le ciel d'air au dessus du produit lors du remplissage initial doit être tel que la dépression atteinte en fin de vidage soit au maximum égale à la dépression réalisable par la pompe 3. De façon avantageuse, on peut prévoir que le rapport C₀/C₁ soit compris entre 100/40 et 100/80, C₀ étant la contenance maximale du réservoir 2 et C₁ le volume de produit conditionné dans ledit réservoir, notamment un rapport de l'ordre de 0,5 est avantageux, par exemple avec C₀ = 15 ml et C₁ = 7,5 ml.

En variante, le prélèvement sans reprise d'air peut être réalisé dans un réservoir 2 déformable élastiquement, le remplissage étant alors réalisé par aspiration du produit source sous l'effet du retour élastique dudit réservoir dans sa forme initiale.

Selon une autre réalisation, le réservoir 2 peut présenter une dépression d'air initiale qui est utilisée pour réaliser le premier remplissage dudit réservoir en produit, le dispositif de prélèvement 3 pouvant être alors du type sans reprise d'air pour permettre des remplissages ultérieurs ou avec reprise d'air pour limiter l'utilisation du flacon à un seul remplissage.

Selon une autre réalisation, le dispositif de prélèvement 3 peut être du type avec reprise d'air, le remplissage étant alors réalisé par injection du produit source dans le réservoir 2, notamment en actionnant une pompe ou une valve d'une source de produit 17 par mise en appui de son tube de sortie sur la soupape de remplissage 16.

La soupape 16 présente un gicleur 18 pourvu d'un canal interne 19 qui s'étend entre un orifice amont 19a débouchant sur une paroi externe 20 dudit gicleur et un orifice aval 19b. Le gicleur 18 peut être réalisé en matériau rigide tel un qu'un polyoxyméthylène (POM) ou un polypropylène dans la gamme des matériaux thermoplastiques.

Le gicleur 18 est monté en translation dans une bague 21 solidaire du corps 1 entre une position stable de fermeture de l'orifice aval 19b et une position contrainte de mise en communication étanche du canal interne 19 avec le réservoir 2 de conditionnement. Dans le mode de réalisation représenté, la soupape 16 de remplissage est disposée sur le fond du corps 1, de sorte notamment à remplir le réservoir 2 par ledit fond, ce qui correspond à un geste intuitif.

Le corps 1 présente une cage inférieure 22 dans laquelle la bague 21 est fixée de façon étanche, notamment par emmanchement. Le fond du corps 1 présente une ouverture 23 de communication avec le réservoir 2 qui est formée pour déboucher dans la cage 22. Le gicleur 18 présente une extrémité aval 18a pourvue d'au moins un orifice aval 19b, ladite extrémité étant montée coulissante dans l'ouverture 23 pour que l'orifice aval 19b soit déplaçable entre une position stable occultée et une position contrainte en communication avec ladite ouverture.

Dans le mode de réalisation représenté, le canal interne 19 est borgne sur l'extrémité aval 18a qui comprend deux canaux aval 19b qui s'étendent radialement de part et d'autre dudit canal interne, la soupape 16 comprenant un joint interne 24 permettant la fermeture étanche des orifices aval 19b en position occultée.

Le joint interne 24 est disposé dans la cage 22 contre le fond du corps 1, ledit joint présentant un trou 24a disposé coaxialement à l'ouverture 23 et au canal interne 19, l'extrémité aval 18a étant montée coulissante dans ledit trou. Ainsi, en position stable (figure 1), les orifices aval 19b sont disposés dans le trou 24a pour être occulté de façon étanche par le joint interne 24 et, en position contrainte (figure 2), lesdits orifices sont disposés au dessus dudit trou pour être en communication avec l'ouverture 23.

La bague 21 présente une paroi extérieure annulaire 25 qui est emmanchée dans la cage 22, ladite paroi présentant un bord interne qui est en appui étanche sur le joint interne 24 et un bord externe présentant une portée intérieure 26 qui délimite une ouverture 27 d'introduction du tube de sortie. En particulier, la portée 26 s'étend radialement vers l'intérieur par rapport à l'axe du canal interne 19.

Dans le mode de réalisation représenté, le gicleur 18 présente un épaulement annulaire 28 sur lequel la paroi externe 20 est formée, un ressort 29 de rappel du gicleur 18 en position stable étant interposé entre une portée interne dudit épaulement et le joint interne 24. Par ailleurs, l'épaulement 28 est monté dans la bague 21 en formant un jeu périphérique 30 avec la paroi annulaire 25 de ladite bague.

En particulier, le ressort 29 permet la mise en appui de la portée externe 20 sur la portée intérieure 26 afin de définir la position de fermeture. Dans cette position, une portée centrale 31 de la paroi externe 20 est disposée dans l'ouverture 27, l'orifice amont 19a débouchant dans ladite portée centrale.

Pour permettre de fiabiliser la mise en appui étanche du tube de sortie de la source de produit 17 sur le gicleur 18 lors du remplissage et donc éviter les fuites lors dudit remplissage, la soupape 16 comprend en outre un joint externe 32 qui est interposé entre la paroi externe 20 et la portée intérieure 26. Les joints interne 24 et externe 32 peuvent être réalisés dans une matière souple et résiliente, par exemple de type élastomère.

Le joint externe 32 présente un trou 33 disposé en regard de l'orifice amont 19a et une zone d'actionnement 34 disposée dans l'ouverture 27 en regard de la portée centrale 31, ladite zone d'actionnement étant agencée pour permettre le remplissage par mise en appui étanche du tube de sortie sur elle afin de déplacer le gicleur 18 en position de mise en communication.

Selon la réalisation représentée et selon l'invention, l'ouverture 27 est délimitée par un bord, ledit bord formant un chanfrein présentant un diamètre externe qui est inférieur à son diamètre interne. Le chanfrein permet de faciliter l'introduction du tube de sortie dans l'ouverture 27 ainsi que son retrait, notamment lorsque l'extrémité dudit tube présente un harpon 35 de retenue du bouton poussoir 4.

Par ailleurs, l'ouverture 27 présente un diamètre externe qui est supérieur au diamètre du trou 33 du joint externe 32 de sorte que la zone d'actionnement 34 soit disposée autour dudit trou. En particulier, le joint externe 32 présente une géométrie annulaire à surfaces planes pour favoriser l'appui étanche avec respectivement le tube de sortie et la paroi externe 20, ladite géométrie présentant le trou 33 en son centre.

Selon une réalisation avantageuse, l'ouverture 27 présente un diamètre externe qui est compris entre 3,8 mm et 4,2 mm, notamment de l'ordre de 4,05 mm pour un diamètre interne de l'ordre de 4,5 mm, afin que la majorité des tubes de sortie du commerce puisse être introduit dans l'ouverture 27. En outre, l'épaisseur de la portée intérieure 26 peut être de l'ordre de 0,6 mm. Par ailleurs, le diamètre extérieur de la cage 22 peut être de l'ordre de 10,5 mm afin d'autoriser le remplissage avec des flacons sources équipés d'enjoliveur qui habillent leur dispositif de prélèvement.

L'écart entre le diamètre externe de l'ouverture 27 et le diamètre du trou 33 peut être compris entre 2,4 mm et 2,8 mm afin d'assurer que, même en cas de désalignement entre le tube de sortie et le gicleur 18, ledit tube soit en communication avec le canal interne 19, et ce pour une majorité des dimensions des tubes de sortie du commerce.

Selon une réalisation avantageuse, le trou 33 du joint externe 32 présente un diamètre qui est compris entre 1,3 mm et 1,5 mm, notamment de l'ordre de 1,4 mm, l'orifice amont 19a présentant un diamètre qui peut être légèrement supérieur à celui du trou 33 afin de réaliser une étanchéité par serrage radial.

Par ailleurs, le joint externe 32 présente un bord extérieur 36 qui est disposé en contact étanche frottant sur la paroi annulaire 25 de la bague 21, le jeu périphérique 30 entre l'épaulement 28 et ladite paroi étant agencé pour permettre un débattement dudit bord par rapport à ladite paroi afin de rompre l'étanchéité du contact frottant.

Dans le mode de réalisation représenté, le diamètre extérieur du bord 36 est sensiblement égal au diamètre intérieur de la paroi annulaire 25 pour que le joint externe 32 soit centré dans la bague 21. En outre, le diamètre extérieur du bord 36 est supérieur à celui de l'épaulement 28 afin que ledit bord soit placé dans le jeu 30, ledit bord n'étant alors pas en appui sur la paroi externe 20 pour permettre le débattement. En particulier, la rupture de l'étanchéité permet, lors de l'opération de remplissage, d'évacuer toute surpression éventuelle entre le gicleur 18 et la bague 21.

## Revendications

1. Flacon de distribution d'un produit fluide comprenant un corps (1) dans lequel un réservoir (2) destiné au conditionnement dudit produit est formé, ledit flacon comprenant en outre un dispositif de prélèvement (3) dudit produit conditionné qui est monté de façon étanche sur ledit corps, ledit corps étant en outre équipé d'une soupape (16) de remplissage dudit réservoir qui est agencée pour permettre la mise en communication d'un tube de sortie d'une source de produit (17) avec ledit réservoir, la soupape (16) présentant un gicleur (18) pourvu d'un canal interne (19) qui s'étend entre un orifice amont (19a) débouchant sur une paroi externe (20) dudit gicleur et un orifice aval (19b), ledit gicleur étant monté en translation dans une bague (21) solidaire du corps (1) entre une position stable de fermeture de l'orifice aval (19b) et une position contrainte de mise en communication étanche du canal interne (19) avec le réservoir (2) de conditionnement, la bague (21) présentant une portée intérieure (26) délimitant une ouverture (27) d'introduction du tube de sortie, la paroi externe (20) du gicleur (18) en position de fermeture étant en appui sur ladite portée intérieure en disposant dans ladite ouverture une portée centrale (31) dans laquelle débouche l'orifice amont (19a), ledit flacon étant **caractérisé en ce que** ladite soupape comprend en outre un joint externe (32) qui est interposé entre ladite paroi externe et ladite portée intérieure, ledit joint présentant un trou (33) disposé en regard de l'orifice amont (19a) et une zone d'actionnement (34) disposée dans l'ouverture (27) en regard la portée centrale (31), ladite zone d'actionnement étant agencée pour permettre le remplissage par mise en appui étanche du tube de sortie sur elle afin de déplacer le gicleur (18) en position de mise en communication, l'ouverture (27) présentant un diamètre externe qui est supérieur au diamètre du trou (33) du joint externe (32), l'ouverture (27) étant délimitée par un bord, ledit bord formant un chanfrein présentant un diamètre externe qui est inférieur à son diamètre interne.

2. Flacon de distribution selon la revendication 1, **caractérisé en ce que** l'écart entre le diamètre externe de l'ouverture (27) et le diamètre du trou (33) est compris entre 2,4 mm et 2,8 mm.

3. Flacon de distribution selon la revendication 1 ou 2, **caractérisé en ce que** l'ouverture (27) présente un diamètre externe qui est compris entre 3,8 mm et 4,2 mm.

4. Flacon de distribution selon l'une quelconque des revendications 1 à 3, **caractérisé en ce que** le trou (33) du joint externe (32) présente un diamètre qui est compris entre 1,3 mm et 1,5 mm.

5. Flacon de distribution selon l'une quelconque des revendications 1 à 4, **caractérisé en ce que** le joint externe (32) présente une géométrie annulaire à surfaces planes.

6. Flacon de distribution selon l'une quelconque des revendications 1 à 5, **caractérisé en ce que** le gicleur (18) présente un épaulement (28) sur lequel la paroi externe (20) est formée, ledit épaulement étant monté dans la bague (21) en formant un jeu périphérique (30) avec une paroi (25) de ladite bague, le joint externe (32) présentant un bord extérieur (36) qui est disposé en contact étanche frottant sur ladite paroi, ledit jeu étant agencé pour permettre un débattement dudit bord par rapport à ladite paroi afin de rompre l'étanchéité du contact frottant.

7. Flacon de distribution selon l'une quelconque des revendications 1 à 6, **caractérisé en ce que** le corps (1) présente une ouverture (23) dans laquelle l'extrémité aval (18a) du gicleur (18) est montée coulissante, ladite extrémité étant pourvue d'au moins un orifice aval (19b) qui est déplaçable entre une position stable occultée et une position contrainte en communication avec l'ouverture (23).

8. Flacon de distribution selon la revendication 7, **caractérisé en ce que** la soupape (16) comprend un joint interne (24) permettant la fermeture étanche de l'orifice aval (19b) en position occultée.

9. Flacon de distribution selon l'une quelconque des revendications 1 à 8, **caractérisé en ce que** le corps (1) présente une cage inférieure (22) dans laquelle la bague (21) est fixée de façon étanche.

10. Flacon de distribution selon l'une quelconque des revendications 1 à 9, **caractérisé en ce que** le corps (1) présente une base tubulaire (1a) sur laquelle est associé un couvercle (1b), le dispositif de prélèvement (3) étant fixé audit couvercle.

11. Flacon de distribution selon la revendication 10, **caractérisé en ce que** la base tubulaire (1a) et le couvercle (1b) présentent chacun une paroi annulaire (11, 12), lesdites parois étant associées par soudure, notamment par friction rotative.

12. Flacon de distribution selon l'une quelconque des revendications 1 à 11, **caractérisé en ce que** le dispositif de prélèvement (3) est du type sans reprise d'air dans le réservoir (2) de conditionnement en compensation du volume de produit distribué.

13. Flacon de distribution selon l'une quelconque des revendications 1 à 12, **caractérisé en ce que** le réservoir (2) a une contenance maximale C0, le volume C1 de produit conditionné dans ledit réservoir étant tel que le rapport C0/C1 est compris entre 100/40 et 100/80.

## Patentansprüche

1. Abgabeflakon für ein flüssiges Produkt, umfassend einen Körper (1), in dem ein Behälter (2) gebildet ist, der zur Konditionierung des Produkts bestimmt ist, wobei der Flakon weiter eine Entnahmevorrichtung (3) für das konditionierte Produkt umfasst, die auf dichte Weise auf dem Körper montiert ist, wobei der Körper weiter mit einem Ventil (16) zum Füllen des Behälters ausgestattet ist, das angeordnet ist, um das Herstellen einer Kommunikation einer Ausgangsröhre einer Produktquelle (17) mit dem Behälter zu ermöglichen, wobei das Ventil (16) eine Düse (18) aufweist, die mit einem Innenkanal (19) versehen ist, der sich zwischen einer stromaufwärtigen Öffnung (19a), die in eine Außenwand (20) der Düse mündet, und einer stromabwärtigen Öffnung (19b) erstreckt, wobei die Düse in einem mit dem Körper (1) fest verbundenen Ring (21) translatorisch zwischen einer stabilen Schließposition der stromabwärtigen Öffnung (19b) und einer gespannten Position des Herstellens einer dichten Kommunikation des Innenkanals (19) mit dem Behälter (2) zur Konditionierung montiert ist, wobei der Ring (21) eine innere Auflagefläche (26) aufweist, die eine Apertur (27) zum Einführen der Ausgangsröhre begrenzt, wobei die Außenwand (20) der Düse (18) in der Schließposition auf der inneren Auflagefläche aufliegt, indem sie in der Apertur über eine mittlere Auflagefläche (31) verfügt, in die die stromaufwärtige Öffnung (19a) mündet, wobei der Flakon **dadurch gekennzeichnet ist, dass** das Ventil weiter eine Außendichtung (32) umfasst, das zwischen der Außenwand und der inneren Auflagefläche eingesetzt ist, wobei die Dichtung ein Loch (33) aufweist, das der stromaufwärtigen Öffnung (19a) zugewandt bereitgestellt ist, und einen Betätigungsbereich (34), der in der Apertur (27), der mittleren Auflagefläche (31) zugewandt, bereitgestellt ist, wobei der Betätigungsbereich angeordnet ist, um das Füllen durch dichtes Auflegen der Auslassröhre auf diesem zu ermöglichen, um die Düse (18) in eine Position des Herstellens einer Kommunikation zu bewegen, wobei die Apertur (27) einen Außendurchmesser aufweist, der größer ist als der Durchmesser des Lochs (33) der Außendichtung (32), wobei die Apertur (27) durch einen Rand begrenzt ist, wobei der Rand eine Fase gebildet, die einen Außendurchmesser aufweist, der kleiner ist als ihr Innendurchmesser.

2. Abgabeflakon nach Anspruch 1, **dadurch gekennzeichnet, dass** die Spanne zwischen dem Außendurchmesser der Apertur (27) und dem Durchmesser des Lochs (33) zwischen 2,4 mm und 2,8 mm umfasst ist.

3. Abgabeflakon nach Anspruch 1 oder 2, **dadurch gekennzeichnet, dass** die Apertur (27) einen Außendurchmesser aufweist, der zwischen 3,8 mm und 4,2 mm umfasst ist.

4. Abgabeflakon nach einem der Ansprüche 1 bis 3, **dadurch gekennzeichnet, dass** das Loch (33) der Außendichtung (32) einen Durchmesser aufweist, der zwischen 1,3 mm und 1,5 mm umfasst ist.

5. Abgabeflakon nach einem der Ansprüche 1 bis 4, **dadurch gekennzeichnet, dass** die Außendichtung (32) eine Ringgeometrie mit ebenen Oberflächen aufweist.

6. Abgabeflakon nach einem der Ansprüche 1 bis 5, **dadurch gekennzeichnet, dass** die Düse (18) einen Absatz (28) aufweist, auf dem die Außenwand (20) gebildet ist, wobei der Absatz im Ring (21) montiert ist, indem er mit einer Wand (25) des Rings ein Umfangsspiel (30) bildet, wobei die Außendichtung (32) einen Außenrand (36) aufweist, der in dichtem Kontakt an der Wand reibend bereitgestellt ist, wobei das Spiel angeordnet ist, um einen Versatz des Randes in Bezug auf die Wand zu ermöglichen, um die Dichtheit des reibenden Kontakts zu lösen.

7. Abgabeflakon nach einem der Ansprüche 1 bis 6, **dadurch gekennzeichnet, dass** der Körper (1) eine Apertur (23) aufweist, in der das stromabwärtige Ende (18a) der Düse (18) gleitend montiert ist, wobei das Ende mit mindestens einer stromabwärtigen Öffnung (19b) versehen ist, die zwischen einer verdeckten stabilen Position und einer gespannten Position in Kommunikation mit der Apertur (23) beweglich ist.

8. Abgabeflakon nach Anspruch 7, **dadurch gekennzeichnet, dass** das Ventil (16) eine Innendichtung (24) umfasst, das das dichte Schließen der stromabwärtigen Öffnung (19b) in verdeckter Position ermöglicht.

9. Abgabeflakon nach einem der Ansprüche 1 bis 8, **dadurch gekennzeichnet, dass** der Körper (1) einen unteren Käfig (22) aufweist, in dem der Ring (21) auf dichte Weise festgemacht ist.

10. Abgabeflakon nach einem der Ansprüche 1 bis 9, **dadurch gekennzeichnet, dass** der Körper (1) eine rohrförmige Basis (1a) aufweist, auf der ein Deckel (1b) zugeordnet ist, wobei die Entnahmevorrichtung (3) am Deckel festgemacht ist.

11. Abgabeflakon nach Anspruch 10, **dadurch gekennzeichnet, dass** die rohrförmige Basis (1a) und der Deckel (1b) jeweils eine ringförmige Wand (11, 12) aufweisen, wobei die Wände durch Schweißen, insbesondere durch Drehreibung, zugeordnet sind.

12. Abgabeflakon nach einem der Ansprüche 1 bis 11, **dadurch gekennzeichnet, dass** die Entnahmevorrichtung (3) vom Typ ohne Luftaufnahme im Behälter (2) zur Konditionierung als Ausgleich des Volumens des abgegebenen Produktes ist.

13. Abgabeflakon nach einem der Ansprüche 1 bis 12, **dadurch gekennzeichnet, dass** der Behälter (2) ein Höchstfassungsvermögen C0 besitzt, wobei das Volumen C1 von konditioniertem Produkt im Behälter derart ist, dass das Verhältnis C0/C1 zwischen 100/40 und 100/80 umfasst ist.

## Claims

1. Vial for dispensing a fluid product comprising a body (1) in which a reservoir (2) intended for the packaging of said product is formed, said vial further comprising a device for removing (3) said packaged product which is sealably mounted on said body, said body being furthermore equipped with a valve (16) for filling said reservoir which is arranged to make it possible to connect an outlet tube of a product source (17) with said reservoir, the valve (16) having a nozzle (18) provided with an inner channel (19) which extends between an upstream orifice (19a) opening onto an outer wall (20) of said nozzle and a downstream orifice (19b), said nozzle being mounted in translation in a ring (21) integral with the body (1) between a stable position for closing the downstream orifice (19b) and a constrained position for the sealed connection of the inner channel (19) with the packaging reservoir (2), the ring (21) having an inner surface (26) delimiting an introduction opening (27) of the outlet tube, the outer wall (20) of the nozzle (18) in the closing position being born on said inner surface by having, in said opening, a central surface (31) in which the upstream orifice (19a) opens, said vial being **characterised in that** said valve further comprises an outer seal (32) which is interposed between said outer wall and said inner surface, said seal having a hole (33) arranged facing the upstream orifice (19a) and an actuation zone (34) arranged in the opening (27) facing the central surface (31), said actuation zone being arranged to make it possible to fill by the sealed bearing of the outlet tube on it, in order to move the nozzle (18) in the connecting position, the opening (27) having an outer diameter which is greater than the diameter of the hole (33) of the outer seal (32), the opening (27) being delimited by an edge, said edge forming a chamfer having an outer diameter which is less than the inner diameter thereof.

2. Dispensing vial according to claim 1, **characterised in that** the distance between the outer diameter of the opening (27) and the diameter of the hole (33) is between 2.4mm and 2.8mm.

3. Dispensing vial according to claim 1 or 2, **characterised in that** the opening (27) has an outer diameter which is between 3.8mm and 4.2mm.

4. Dispensing vial according to any one of claims 1 to 3, **characterised in that** the hole (33) of the outer seal (32) has a diameter which is between 1.3mm and 1.5mm.

5. Dispensing vial according to any one of claims 1 to 4, **characterised in that** the outer seal (32) has an annular geometry with flat surfaces.

6. Dispensing vial according to any one of claims 1 to 5, **characterised in that** the nozzle (18) has a shoulder (28) on which the outer wall (20) is formed, said shoulder being mounted in the ring (21) by forming a peripheral clearance (30) with a wall (25) of said ring, the outer seal (32) having an outer edge (36) which is arranged in sealed contact rubbing on said wall, said clearance being arranged to make it possible for an articulation of said edge with respect to said wall in order to break the sealing of the rubbing contact.

7. Dispensing vial according to any one of claims 1 to 6, **characterised in that** the body (1) has an opening (23) in which the downstream end (18a) of the nozzle (18) is slidably mounted, said end being provided with at least one downstream orifice (19b) which can be moved between a stable hidden position and a constrained position in communication with the opening (23).

8. Dispensing vial according to claim 7, **characterised in that** the valve (16) comprises an inner seal (24) making it possible for the sealed closing of the downstream orifice (19b) in the hidden position.

9. Dispensing vial according to any one of claims 1 to 8, **characterised in that** the body (1) has a lower cage (22) wherein the ring (21) is fixed sealed.

10. Dispensing vial according to any one of claims 1 to 9, **characterised in that** the body (1) has a tubular base (1a) on which is associated a cover (1b), the removal device (3) being fixed to said cover.

11. Dispensing vial according to claim 10, **characterised in that** the tubular base (1a) and the cover (1b) each have an annular wall (11, 12), said walls being associated by welding, in particular by rotating friction.

12. Dispensing vial according to any one of claims 1 to 11, **characterised in that** the removal device (3) is of the type without returning air into the packaging reservoir (2) in compensation for the product volume dispensed.

13. Dispensing vial according to any one of claims 1 to 12, **characterised in that** the reservoir (2) has a maximum capacity C0, the volume C1 of product packaged in said reservoir being such that the ratio C0/C1 is between 100/40 and 100/80.
